Europäisches Patentamt

European Patent Office

Office européen des brevets

(19)

(11) Publication number: **0 269 597 B1**

# EUROPEAN PATENT SPECIFICATION

(12)

(45) Date of publication of patent specification: **17.07.91**

(51) Int. Cl.5: **F16K 11/07**

(21) Application number: **87850364.8**

(22) Date of filing: **24.11.87**

(54) **Seal means for a cylindrical type slide valve.**

(30) Priority: **24.11.86 SE 8605005**

(43) Date of publication of application:
**01.06.88 Bulletin 88/22**

(45) Publication of the grant of the patent:
**17.07.91 Bulletin 91/29**

(84) Designated Contracting States:
**DE FR GB IT**

(56) References cited:
**US-A- 3 044 491**
**US-A- 3 342 205**
**US-A- 3 835 887**
**US-A- 4 267 862**
**US-A- 4 495 969**

(73) Proprietor: **Atlas Copco Aktiebolag**
**Nacka**
**S-105 23 Stockholm(SE)**

(72) Inventor: **Carlsson, Sven Rune Egon**
**PL 8555**
**S-505 90 Boras(SE)**
Inventor: **Blomqvist, Per Claes Arne**
**Hagaberg**
**S-510 52 Malsryd(SE)**

(74) Representative: **Pantzar, Tord et al**
**c/o Atlas Copco Tools AB Patentavdelningen**
**Box 815 10**
**S-104 82 Stockholm(SE)**

## Description

This invention relates to a seal means for a cylindrical type slide valve in which the valve element is arranged to control one or more fluid flow ports in a valve housing. In particular, the seal means according to the invention is intended for slide valves controlling gaseous pressure fluids, for example pressure air.

In a previous slide valve of the above type the valve element is sealed off relative to the valve housing by means of a clearance seal. This means that a very narrow gap is arranged between the valve element and the valve housing which in turn requires a very expensive and accurate machining of the valve element and the housing. Despite this, there will still be some leakage between the valve element and the housing.

In an another previous type of slide valve the valve element is sealed off relative to the valve housing by means of O-rings mounted on the valve element (e.g. US-A-3044491). These O-rings cause a considerable frictional resistance between the valve element and the housing, a resistance which is pressure dependant such that when the pressure increases the contact pressure between the O-rings and the housing increases as well. The O-ring seal arrangement also demands specially designed communication ports in the valve housing to prevent the O-rings from getting stuck in the ports.

The present invention intends to overcome the above problems by creating a seal means which comprises two or more resilient ring elements mounted in circumferential grooves on valve element, and a thin walled plastic sleeve mounted by shrinking on said valve element, thereby covering said ring elements and assuming substantially the same outer contour as the valve element and said ring elements had before said sleeve was mounted.

An embodiment of the invention will hereinbelow be described in detail with reference to the accompanying drawing.

On the drawing:

Fig 1 shows a longitudinal section through a cylindrical type slide valve provided with a seal means according to the invention.

Fig 2 shows a cross section along line II-II in Fig 1.

The valve shown on the drawing comprises a valve housing 10 on which is mounted two end closures 11 and 12 and which is formed with a central bore 13 for guidingly receiving a valve element 14. The housing 10 is further provided with five fluid communication ports 16-20 and two manoeuver ports 21 and 22. The manoeuver ports 21, 22 are connected to a directional valve (not shown) and are arranged to feed pressure fluid to the respective ends of the valve element 14 to make the latter shift between its two end positions. The fluid communication ports 16-20 in the valve housing 10 are open into annular cavities 16a-20a which are coaxial with the bore 13.

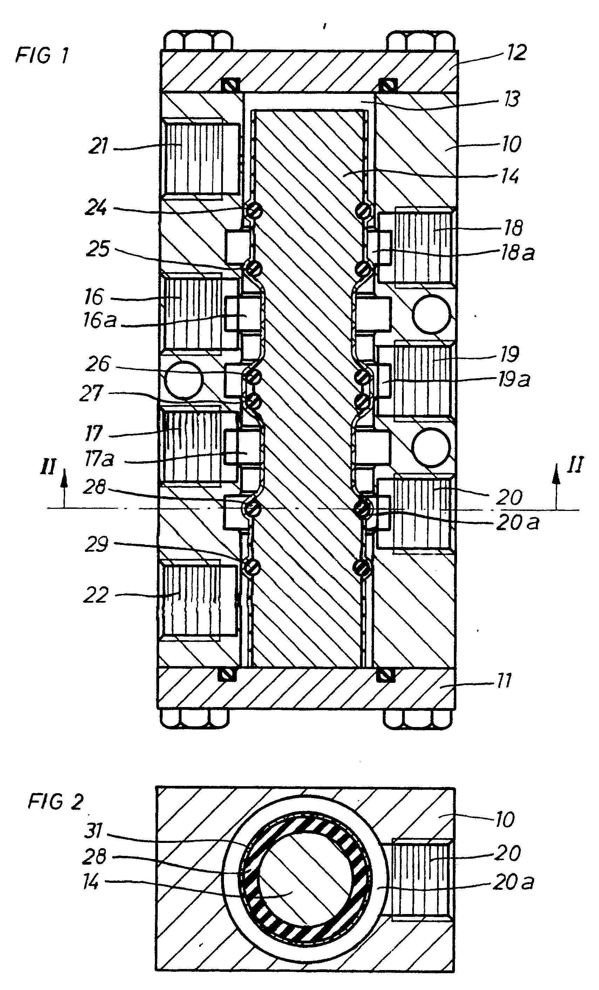

The valve element 14 is provided with six O-rings 24-29 which are mounted in circumferential grooves on the valve element 14. Extending over the entire length of the valve element 14 there is a thin walled plastic sleeve 31 which is mounted by shrinking on the valve element 14. As is illustrated in Fig 1, the plastic sleeve 31 assumes substantially the same outer contour as the valve element 14 and the O-rings 24-29 had before the sleeve 31 was mounted. This is obtained by using a plastic sleeve of an original diameter somewhat smaller than the smallest diameter of the valve element 14. The sleeve 31 is expanded under heat treatment to a diameter exceeding the outer diameter of the O-rings 24-29. Then the sleeve 31 is cooled down to room temperature and slided on the valve element 14. Thereafter, the sleeve 31 is exposed to a second heating, whereby it tries to reassume its original small diameter. The sleeve 31 is thereby shrinked tightly onto the valve element 14 and the O-rings 24-29.

A suitable material for the sleeve 31 is a autocrosslinkable high density polyethylene. Very good results have been achieved with a material called HDPEX developed and marketed by ASEA Compound. This material is very suitable for this purpose since it has very good selflubricating properties.

By the seal means according to the invention, the O-rings 24-29 mounted on the valve element 14 serve as a resilient bias means for obtaining a proper radial contact between the sleeve 31 and the valve housing bore 13. The sleeve 31 prevents pressure fluid from reaching the O-rings 24-29 and, thereby, from making the contact pressure generated by the O-rings 24-29 dependant on the fluid pressure. Thanks to its good selflubricating properties the sleeve 31 provides an advantageous outer surface of the valve element, which is particularly significant at the cooperation between the sealing contact areas of the valve element and the edges of the annular cavities 16a-20a in the valve housing bore 13. The risk for the valve element 14 to get stuck in the bore 13 is eliminated.

By the seal means according to the invention there is obtained a slide valve which operates with a low frictional resistance, even after a longer period of rest, and which provides a safe troublefree operation. In addition this is obtained by a relatively low manufacturing cost of the valve, including the seal means according to the invention. This means a substantial improvement over prior art valves.

## Claims

1. Seal means for a cylindrical type slide valve in which the valve element (14) is arranged to control one or more fluid flow ports (16-20) in a bore (13) of a valve housing (10), **characterized** by two or more resilient ring elements (24-29) mounted in circumferential grooves on the valve element (14), and a thin walled plastic sleeve (31) mounted by shrinking on said valve element (14), thereby covering said ring elements (24-29) and assuming substantially the same outer contour as the valve element (14) and said ring elements (24-29) had before said sleeve (31) was mounted.

2. Seal means according to claim 1, wherein said plastic sleeve (31) consists of a autocrosslinkable high density polyethylene with self-lubricating properties.

3. Seal means according to claim 1 or 2, wherein said ring elements (24-29) comprise O-rings.

## Revendications

1. Joint d'étanchéité pour vanne à tiroir de type cylindrique dans laquelle l'élément de vanne (14) est monté de manière à commander un ou plusieurs orifices de débit de fluide (16 à 20) dans un alésage (13) d'un carter de vanne (10), joint d'étanchéité caractérisé en ce qu'il comprend deux ou plusieurs éléments annulaires élastiques (24 à 29) montés dans des rainures périphériques circulaires de l'élément de vanne (14), et un manchon de matière plastique à paroi mince (31) monté par contraction sur l'élément de vanne (14) de manière à recouvrir ainsi les éléments annulaires (24 à 29) et à prendre sensiblement le même contour extérieur que celui que présentaient l'élément de vanne (14) et les éléments annulaires (24 à 29) avant la mise en place du manchon (31).

2. Joint d'étanchéité selon la revendication 1, caractérisé en ce que le manchon de matière plastique (31) consiste en un polyéthylène auto-liant à haute densité présentant des propriétés d'autolubrification.

3. Joint d'étanchéité selon l'une quelconque des revendications 1 et 2, caractérisé en ce que les éléments annulaires (24 à 29) sont constitués par des joints toriques.

## Patentansprüche

1. Dichtung für ein zylindrisches Schiebeventil, in welchem das Ventilelement (14) ein oder mehrere Fluidleitungs-Anschlußöffnungen (16 - 20) an eine Bohrung (13) in einem Ventilgehäuse (10) steuert, **gekennzeichnet durch** zwei oder mehr in Umfangsnuten auf dem Ventilelement (14) sitzenden, elastisch nachgiebigen Ringelementen (24 - 29) und eine dünnwandige Buchse (31) aus Kunststoff, welche auf das Ventilelement (14) aufgeschrumpft ist, dadurch die Ringelemente (24 - 29) überdeckt und im wesentlichen dieselbe äußere Kontur annimmt, wie sie das Ventilelement (14) und die Ringelemente (24 - 29) vor der Montage der Buchse (31) hatten.

2. Dichtung nach Anspruch 1, **dadurch gekennzeichnet,** daß die Kunststoffbuchse (31) aus einem selbstvernetzenden Hochdruck-Polyäthylen mit selbstschmierenden Eigenschaften besteht.

3. Dichtung nach Anspruch 1 oder 2, **dadurch gekennzeichnet,** daß die Ringelemente (24 - 29) 0-Ringe aufweisen.

EP 0 269 597 B1

FIG 1

21

24

25

16
16a

26

27

17
17a

II

28

29

22

12

13

10

14

18
18a

19
19a

20
20a

II

11

FIG 2

31
28
14

10

20
20a

4